# EUROPEAN PATENT APPLICATION

(11) **EP 0 890 777 A1**
(43) Date of publication of application: **13.01.1999**
(21) Application number: 98201869.9
(22) Date of filing: 05.06.1998
(51) Int. Cl.: F16L 41/14

(54) **Branch unit with stable sealing ring**

(30) Priority: 10.07.1997 NL 1006538
(71) Applicant: POLVA PIPELIFE B.V., 1600 AJ Enkhuizen (NL)
(72) Inventor: Van Vulpen, Johanna Marjan, 1055 BB Amsterdam (NL); Guitaneau, Hans Edward, 1613 DH Grootebroek (NL)
(74) Representative: de Bruijn, Leendert C.

(57) **Abstract**

A connecting structure between a main line (1) and a branch line comprises a tubular coupling element (3), of which one end (6), bearing an external flange (8), is connected to the main line (1) by means of a hole (7) provided therein, and of which the other end (4) is connected to the branch line, a sliding saddle (9) which is fitted around the coupling element (3) and is curved according to the main line (1) and rests against the latter, a tensioning element (10,11) which interacts with the coupling element (3), in order to pre-tension the saddle (9) on the main line (1), and a sealing ring (12) which is situated around the end (6) of the coupling element (3) inserted into the hole (7) and is held pressed down in a sealing manner, under the influence of the pre-tension provided by the tensioning element (10,11), in the hole (7) between the external flange (8) of the coupling element (3) and the inside wall of the main line (1). At its end near the external flange (8), the sealing ring (12) bears an insert piece (16-20) which has greater rigidity and/or hardness than the sealing ring (12).

## Description

The invention relates to a connecting structure between a main line and a branch line, which structure comprises a tubular coupling element, of which one end, bearing an external flange, is connected to the main line by means of a hole provided therein, and of which the other end is connected to the branch line, a sliding collar which is fitted around the coupling element and is curved according to the main line and rests against the latter, a tensioning element which interacts with the coupling element, in order to pretension the collar on the main line, and a sealing ring which is situated around the end of the coupling element inserted into the hole and is held pressed down in a sealing manner, under the influence of the pre-tension provided by the tensioning element, in the hole between the external flange of the coupling element and the inside wall of the main line.

Such a connecting structure is known from NL-A-8403899. This known structure is designed with a smooth main line. However, the invention is not limited to such a design, but can also be used on, for example, connecting structures with a profiled main line.

The known connecting structure is satisfactory as regards seal and reliability, but there is still room for improvement. For instance, it is found that in extreme cases the sealing ring is sometimes not wedged between the coupling element, so that the sealing ring is pressed outwards under the influence of the pretension.

The object of the invention is to improve a connecting structure of that type in such a way that the correct positioning of the sealing ring can be guaranteed better. That object is achieved by the fact that the sealing ring bears an insert piece which has greater rigidity and/or hardness than the sealing ring.

Good results are obtained in the case of an embodiment in which the insert piece is situated on the end of the sealing ring near the external flange. The outward pulling of the sealing ring is best counteracted if in the pre-tensioned state of the coupling element the insert piece is situated beyond the outermost limit of the external flange and outside the region situated between said flange and the inside wall of the main line, in such a way that the sealing ring is retained and prevented from slipping away in the direction of the outside of the main line.

The insert piece can be designed in many different ways. The sealing ring preferably bears a fully circular insert piece; however, the insert piece can also consist of segments, viewed in the peripheral direction.

As a further alternative, the sealing ring can bear two circular insert pieces which extend adjacent to each other, at a distance from each other, in the pre-tensioned state of the coupling piece one insert piece lying inside the region situated between the flange and the inside wall of the main line, and the other lying outside said region.

In this embodiment the sealing ring is secured against both inward and outward movement. This securing can be improved further by interconnecting the two insert pieces by means of connecting elements extending through the region between the external flange and the inside wall of the main line.

Each insert piece is preferably embedded in the material of the sealing ring.

The invention will now be explained in greater detail with reference to a number of exemplary embodiments shown in the figures.

Figure 1 shows a first embodiment of the connecting structure according to the invention.

Figure 2 shows a detail of a second possible embodiment.

Figure 3 shows a detail of a third possible embodiment.

Figure 4 shows the connecting structure according to the invention in the state in which it is not pre-tensioned, during connection to the main line.

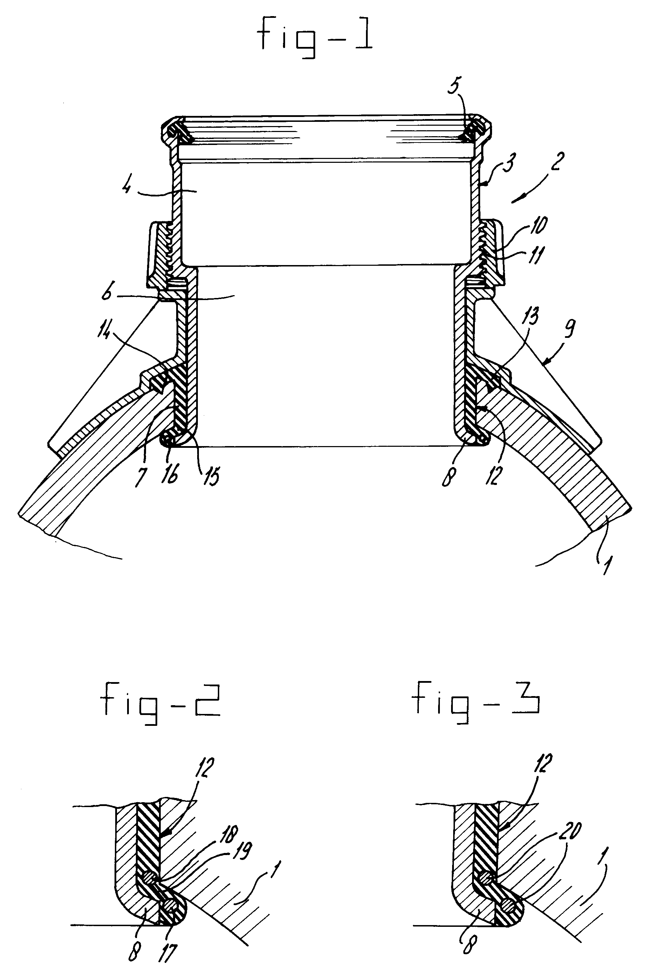

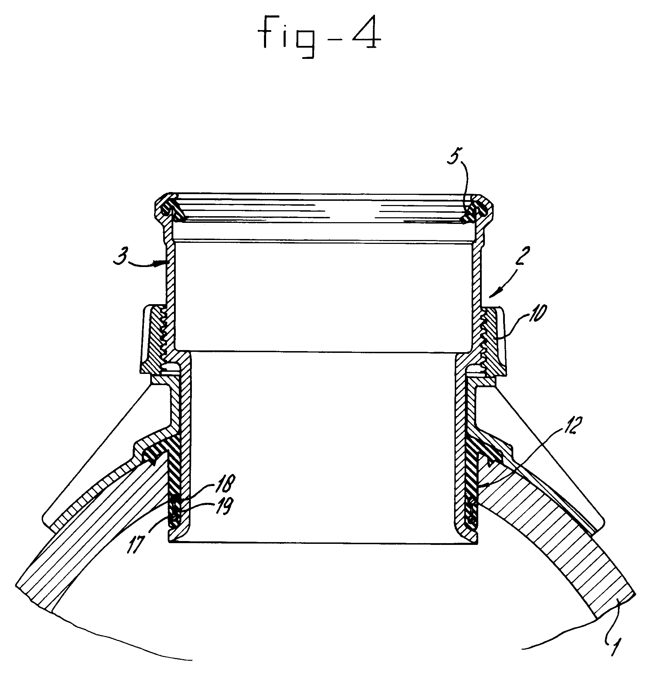

The connecting structure shown in Figures 1 and 4 comprises a main line 1, on which the connection for a branch line (not shown) is shown in its entirety by 2. The connection 2 comprises a coupling element 3, which at one end has a socket 4 for the branch line, with the usual sealing ring 5. The coupling element 3 also comprises a connecting part 6, which is inserted into the hole indicated by 7 in the main line 1.

The connecting part 6 has at its end an external flange 8, the external diameter of which is just slightly smaller than the internal diameter of the hole 7. In the position shown in Figure 4 the connection 2 can therefore be pushed straight into the hole 7.

The connection 2 also comprises, around the connecting part 6, a saddle 9, which can be pre-tensioned against the outside wall of the main line 1 by means of a tensioning nut 10, which interacts with the socket 4 by way of screw thread 11.

A sealing ring 12 according to the invention is situated between the connecting part 6, the flange 8 and the edge of the hole 7. Said sealing ring 12 has at its outward pointing end an external flange 13, which is accommodated in a press fit in a recess 14 in the saddle 9.

During tightening of the connection 2 the saddle 9 is pressed by the tensioning nut 10 onto the outside wall of the main line 1. The bottom part of the sealing ring 12 is then moved outwards over the external flange 8, thereby being clamped between said external flange 8 and the inside wall of the main line 1 and of the hole 7.

According to the invention, a circular insert piece 16, which is more rigid and/or harder than the material of the sealing ring 12, is provided in the first end 15 of the sealing ring 12.

As can be seen in Figure 1, said insert piece ultimately goes into the region inside the main line 1, on the external edge of the flange 8. The outermost part of the sealing ring 12, with the insert piece 16 therein, after pre-tensioning can no longer escape through the rather narrow gap between flange 8 and the opposite inside wall of the main line 1, so that the sealing ring 12 is secured against being forced outwards.

In the case of the variant shown in Figure 2, two circular insert pieces 17, 18, interconnected by pulling elements 9 and 10, are provided. In the case of this embodiment the sealing ring 12 is secured against both inward and outward movement.

The same applies to the embodiment of Figure 3, in which two likewise circular insert pieces 20 are provided, but in this case they are not interconnected.

Although the insert pieces shown have a round cross-section, another shape, such as square, triangular, star-shaped etc. is also possible.

## Claims

1. Connecting structure between a main line (1) and a branch line, which structure comprises a tubular coupling element (3), of which one end (6), bearing an external flange (8), is connected to the main line (1) by means of a hole (7) provided therein, and of which the other end (4) is connected to the branch line, a sliding saddle (9) which is fitted around the coupling element (3) and is curved according to the main line (1) and rests against the latter, a tensioning element (10, 11) which interacts with the coupling element (3), in order to pretension the saddle (9) on the main line (1), and a sealing ring (12) which is situated around the end (6) of the coupling element (3) inserted into the hole (7) and is held pressed down in a sealing manner, under the influence of the pretension provided by the tensioning element (10, 11), in the hole (7) between the external flange (8) of the coupling element (3) and the inside wall of the main line (1), characterized in that at its end situated near the external flange (8) the sealing ring (12) bears an insert piece (16-20) which has greater rigidity and/or hardness than the sealing ring (12).

2. Connecting structure according to Claim 1, in which the insert piece (16) is situated on the end of the sealing ring (13) near the external flange (8).

3. Connecting structure according to Claim 1 or 2, in which in the pre-tensioned state of the coupling element (3) the insert piece (16-20) is situated beyond the outermost limit of the external flange (8) and outside the region situated between said flange (8) and the inside wall of the main line (1), in such a way that the sealing ring (12) is retained and prevented from slipping away in the direction of the outside of the main line (1).

4. Connecting structure according to Claim 3, in which the sealing ring (12) bears a circular insert piece (16-20).

5. Connecting structure according to Claim 4, in which the sealing ring (12) bears two circular insert pieces (17, 18; 20) which extend adjacent to each other, at a distance from each other, and in the pretensioned state of the coupling piece (3) one insert piece (17, 20) lies inside the region situated between the flange (8) and the inside wall of the main line (1), and the other (18, 20) lies outside said region.

6. Connecting structure according to Claim 5, in which the two insert pieces (17, 18) are interconnected by connecting elements (19) extending through the region between the external flange (8) and the inside wall of the main line (1).

7. Connecting structure according to one of the preceding claims, in which the sealing ring (12) has an external flange (13) which at the outside extends over the wall of the main line (1), which flange (13) is accommodated in a corresponding recess (14) in the saddle (9).

8. Connecting structure according to one of the preceding claims, in which each insert piece (16-20) is embedded in the material of the sealing ring (12).
